# EUROPEAN PATENT APPLICATION

(11) **EP 4 265 754 A1**
(43) Date of publication of application: **25.10.2023**
(21) Application number: 22742563.4
(22) Date of filing: 18.01.2022
(51) Int. Cl.: C22B 1/00, C22B 1/02, C22B 7/00, H01M 10/54

(54) **WASTE LITHIUM-ION BATTERY TREATMENT METHOD**

(30) Priority: 20.01.2021 JP 2021006860
(71) Applicant: Asaka Riken Co., Ltd., Koriyama-shi, Fukushima 963-0725 (JP)
(72) Inventor: SAKUMA, Yukio, Koriyama-shi, Fukushima 963-0725 (JP); HIRAOKA, Taro, Koriyama-shi, Fukushima 963-0725 (JP)
(74) Representative: Schön, Christoph
(86) International application number: PCT/JP2022/001557
(87) International publication number: WO 2022/158441

(57) **Abstract**

Provided is a method for treating waste lithium-ion batteries, the method capable of providing battery powder without treatment of fluorine generated by thermal decomposition. In the present invention, a waste lithium-ion battery is heat-treated in a range of temperatures equal to or more than a temperature at which an electrolytic solution is evaporated to dryness and less than a temperature at which fluororesin is thermally decomposed.

## Description

### Technical Field

The present invention relates to a method for treating waste lithium-ion batteries.

### Background Art

Conventionally, there are known lithium ion batteries that use a composite oxide containing lithium such as lithium manganate, lithium nickelate, and lithium cobaltate as a positive electrode active material. In recent years, with the spread of lithium-ion batteries, various methods have been proposed for recovering valuable metals such as lithium, manganese, nickel, and cobalt from waste lithium-ion batteries and reusing them as the positive electrode active material (for example, refer to Patent Literature 1).

In the lithium-ion battery, for example, a positive electrode, a negative electrode, and a separator disposed between the two electrodes are housed in a housing made of aluminum or the like, together with an electrolytic solution. Herein, the positive electrode or the negative electrode is formed by applying a positive electrode active material or a negative electrode active material respectively to a current collector such as an aluminum foil, using a fluororesin such as polyvinylidene fluoride (PVDF) as a binder, and a separator made of polyolefin is used for the above separator.

When recovering the valuable metal from the waste lithium-ion battery, the powder containing the valuable metal obtained by heat-treating (roasting) the waste lithium-ion battery (hereinafter referred to as battery powder) is dissolved in an acid solution such as hydrochloric acid or sulfuric acid, and the resulting solution is subjected to solvent extraction. Patent Literature 1 describes that the heat treatment is performed at a temperature in the range of 550 to 650°C.

### Citation List

### Patent Literature

Patent Literature 1: Japanese Patent Laid-Open No. 2017-36490

### Summary of Invention

### Technical Problem

However, when the heat treatment of the waste lithium-ion battery is performed at a temperature in the range of 550 to 650°C, there occurs such a problem that fluorine generated by thermal decomposition of the fluororesin used in the binder is mixed into the battery powder, and at the same time, the fluorine resulting from the decomposition is mixed into the exhaust gas during the heat treatment. When the battery powder with fluorine mixed in is dissolved in an acid solution, the fluorine is eluted, and it is thus necessary to treat waste water containing the eluted fluorine and exhaust gas with fluorine mixed in.

An object of the present invention is to eliminate such a problem and to provide a method for treating waste lithium-ion batteries, the method capable of obtaining a battery powder containing no fluorine generated by thermal decomposition, requiring no exhaust gas treatment during heat treatment, and suppressing the elution of fluorine when the battery powder is dissolved.

### Solution to Problem

To achieve such an object, in the method for treating waste lithium-ion batteries of the present invention, the waste lithium-ion battery is heat-treated in a range of temperatures equal to or more than a temperature at which the electrolytic solution is evaporated to dryness and less than a temperature at which the fluororesin is thermally decomposed.

According to the method for treating waste lithium-ion batteries of the present invention, heat-treating the waste lithium-ion battery at a temperature within the above range can evaporate and remove the electrolytic solution, whereas the fluororesin used in the binder, separator, or the like is not thermally decomposed, thus allowing to provide a battery powder that elutes no fluorine when dissolved in an acid.

In the method for treating waste lithium-ion batteries of the present invention, battery powder may be obtained by pulverizing the waste lithium-ion battery after the heat treatment, or battery powder may be obtained by performing the heat treatment after pulverizing the waste lithium-ion battery.

In the method for treating waste lithium-ion batteries of the present invention, the heat treatment is preferably performed at a temperature in the range of 100 to 450°C. If the heat treatment is performed at a temperature of less than 100°C, the electrolytic solution may not be evaporated to dryness, and if it is performed at a temperature of more than 450°C, the fluororesin may be thermally decomposed.

### Brief Description of Drawing

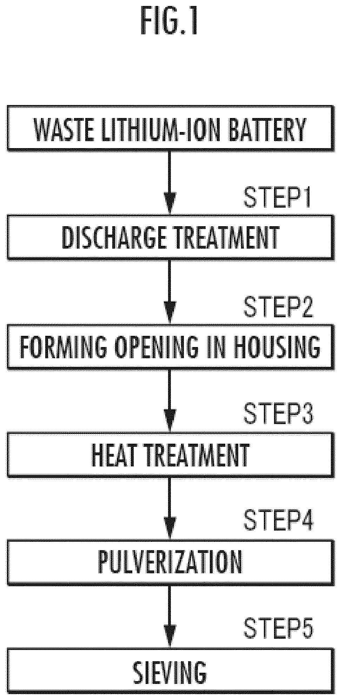

FIG. 1 is a flow chart showing a method for treating waste lithium-ion batteries according to the present invention.

### Description of Embodiments

Embodiments of the present invention will be described in more detail with reference to the accompanying drawing.

In the method for treating waste lithium-ion batteries of the present embodiment, the waste lithium-ion battery means a used lithium-ion battery whose life has been exhausted as a battery product, a lithium-ion battery discarded as a defective product during the production process, and a residual positive electrode material used for commercialization in the production process.

As shown in FIG. 1, in the method for treating waste lithium-ion batteries of the present embodiment, when the waste lithium-ion battery is a used lithium-ion battery whose life has been exhausted as a battery product, or a lithium-ion battery discarded as a defective product in the production process, first, in STEP 1, a discharge treatment is performed to discharge all remaining electric charges. The discharge treatment can be performed, for example, in salt water.

Subsequently, in STEP 2, an opening is formed in the housing of the waste lithium-ion battery, and in STEP 3, heat treatment (roasting) is performed. The heat treatment (roasting) is performed in a range of temperatures equal to or more than a temperature at which the electrolytic solution is evaporated to dryness and less than a temperature at which the fluororesin is thermally decomposed, preferably at a temperature in the range of 100 to 450°C. Forming an opening in the housing of the waste lithium-ion battery can prevent the housing from exploding (bursting) due to evaporation of the electrolytic solution during the heat treatment.

After the heat treatment, the waste lithium-ion battery is pulverized in STEP 4, and the housing, current collector, and the like are removed by sieving in STEP 5 to obtain battery powder containing valuable metals. The pulverization can be performed with a pulverizer such as a hammer mill or jaw crusher.

Alternatively, STEP 3 may be performed after performing STEPs 4 and 5 without performing the operation of forming an opening in the housing in the STEP 2. That is, the waste lithium-ion battery after the discharge treatment in the STEP 1 is pulverized by the pulverizer (STEP 4), the housing, current collector, and the like are removed by sieving (STEP 5), and then the heat treatment at a temperature within the above range (STEP 3), which may provide the battery powder.

In addition, in the method for treating waste lithium-ion battery of the present embodiment, when the waste lithium-ion battery is a residual positive electrode material and the like used for commercialization in the production process, without performing the discharge treatment (STEP 1) and the formation of the opening (STEP 2), the heat treatment is performed at the temperature in the above range (STEP 3), followed by the pulverization with the pulverizer (STEP 4), and the current collector and the like are removed by sieving (STEP 5), which may provide the battery powder. In addition, the waste lithium-ion battery, which is the residual positive electrode material and the like used for commercialization in the production process, is pulverized with the pulverizer (STEP 4), the current collector and the like are removed by sieving (STEP 5), and then the heat treatment at a temperature within the above range (STEP 3), which may provide the battery powder.

In the present embodiment, performing the heat treatment at a temperature within the above range can provide battery powder containing no fluorine. The heat treatment is more preferably performed at a temperature in the range of 100 to 350°C, more preferably in the range of 150 to 250°C.

In addition, the heat treatment can be performed, for example, in any atmosphere of an air atmosphere, an inert gas atmosphere, or a vacuum atmosphere in an electric furnace for a period of time in the range of 0.5 to 24 hours.

Subsequently, the example and comparative example of the present invention are shown.

### Example

### [Example]

In the present example, a used lithium-ion battery whose life as a battery product had been exhausted, as a waste lithium-ion battery, was discharged in salt water (STEP 1), an opening was formed in the housing (STEP 2), and then the heat treatment (STEP 3) was performed by holding the temperature of 150°C for 4 hours in an electric furnace under an inert gas atmosphere. Fluorine was not detected in the exhaust gas from the heat treatment, and no odor remained after the heat treatment.

Subsequently, the heat-treated waste lithium-ion battery was pulverized by a hammer mill (STEP 4), and the housing, current collector, and the like were removed by sieving (STEP 5) to provide battery powder.

Then, the battery powder was dissolved in hydrochloric acid as an acid solution to provide an acid solution. Measurement of the elution percentage of lithium, manganese, nickel, cobalt, and fluorine into the acid solution relative to the amount contained in the battery powder indicated that the elution levels of lithium, manganese, nickel, and cobalt were 98% or more, whereas the elution level of fluorine was less than 0.01%. In addition, the fluorine content in the acid solution was less than 2 mg/L.

### [Comparative Example]

In the present comparative example, battery powder was obtained in exactly the same manner as in the example, except that the waste lithium-ion battery was kept at a temperature of 600°C in an electric furnace and subj ected to heat treatment (roasting). The fluorine content of 0.5 mg/L was detected in the exhaust gas from the heat treatment, but no odor remained after the heat treatment.

Then, the battery powder was dissolved in hydrochloric acid as an acid solution to provide an acid solution. Measurement of the elution percentage of lithium, manganese, nickel, cobalt, and fluorine into the acid solution relative to the amount contained in the battery powder indicated that the elution amounts of lithium, manganese, nickel, and cobalt were 98% or more, and the elution amount of fluorine was 0.10%. In addition, the fluorine content in the acid solution was 45 mg/L.

As described above, according to the method for the example in which the waste lithium-ion battery is heat-treated at 150°C that is a temperature within a range equal to or more than a temperature at which the electrolytic solution is evaporated to dryness and less than a temperature at which the fluororesin is thermally decomposed, it is clear that substantially fluorine-free battery powder can be obtained. Whereas, according to the method of comparative example in which the waste lithium-ion battery is heat-treated at 600°C that is a temperature equal to or more than a temperature at which the fluororesin is thermally decomposed, it is clear that the battery powder contains fluorine.

### Reference Signs List

None

## Claims

1. A method for treating waste lithium-ion batteries, the method comprising heat-treating a waste lithium-ion battery in a range of temperatures equal to or more than a temperature at which an electrolytic solution is evaporated to dryness and less than a temperature at which fluororesin is thermally decomposed.

2. The method for treating waste lithium-ion batteries according to claim 1, wherein the waste lithium-ion battery is pulverized after the heat treatment to provide battery powder.

3. The method for treating waste lithium-ion batteries according to claim 1, wherein the waste lithium-ion battery is pulverized and then subjected to the heat treatment to provide battery powder.

4. The method for treating waste lithium-ion batteries according to any one of claims 1 to 3, wherein the heat treatment is performed at a temperature in a range of 100 to 450°C.
